# EUROPÄISCHE PATENTSCHRIFT

(11) **EP 2 506 382 B1**
(45) Veröffentlichungstag und Bekanntmachung des Hinweises auf die Patenterteilung: **01.10.2014**
(21) Anmeldenummer: 12158395.9
(22) Anmeldetag: 07.03.2012
(51) Int. Cl.: H02J 3/12, H02J 13/00

(54) **Verfahren und Vorrichtung zur elektrischen Energieversorgung**
Method and device for supplying electrical energy
Procédé et dispositif d'alimentation en énergie électrique

(30) Priorität: 28.03.2011 DE 102011006214
(43) Veröffentlichungstag der Anmeldung: 03.10.2012
(73) Patentinhaber: Siemens Aktiengesellschaft, 80333 München (DE)
(72) Erfinder: Linzmaier, Klaus-Peter, 73650 Winterbach (DE)

(56) Entgegenhaltungen:
- EP-A2- 1 672 778
- EP-A2- 1 783 365
- WO-A2-2012/084196
- GB-A- 2 361 118
- US-B1- 7 218 998

## Beschreibung

Die Erfindung betrifft ein Verfahren zur elektrischen Energieversorgung nach den Merkmalen des Oberbegriffs des Anspruchs 1 und eine Vorrichtung zur Durchführung des Verfahrens nach den Merkmalen des Oberbegriffs des Anspruchs 6.

Aus dem Stand der Technik ist es allgemein bekannt, dass elektrische Energie nur in begrenztem Maße speicherbar ist. Somit ist es erforderlich, dass der größte Teil der erzeugten elektrischen Energie zeitgleich verbraucht wird. Aus der Einbeziehung einer wachsenden Menge von alternativen Energiequellen in ein Energieverteilsystem, welche beispielsweise wie Windenergie oder Solarenergie nicht ständig, nicht vorhersehbar und nicht in konstanter Höhe erzeugbar sind, und einer ebenfalls häufig nicht vorhersehbaren und nicht konstanten Abnahme durch Endverbraucher, resultiert eine sehr hohe Lastdynamik im Energieverteilsystem.

Diese hohe Lastdynamik kann sowohl zu technischen Nachteilen, wie beispielsweise zu einer Überlastung eines Übertragungsnetzes des Energieverteilsystems, als auch zu wirtschaftlichen Nachteilen für einen Betreiber des Übertragungsnetzes, wie z. B. Vertragsstrafen aufgrund ungeplanter Lastflussverschiebungen, führen.

Zusätzlich ist es nachteilig, dass elektrische Verbraucher mit einem nahezu ohmschen Lastverhalten, bei welchen die entnommene elektrische Leistung quadratisch von der elektrischen Spannung des Übertragungsnetzes abhängt, nach und nach durch elektrische Verbraucher ersetzt werden, welche innerhalb großer Spannungs- und/oder Frequenzbereiche des Übertragungsnetzes eine konstante elektrische Leistung aus diesem entnehmen. Zu diesen Verbrauchern zählen beispielsweise Geräte, deren interne Versorgungsspannung mittels Schaltnetzteilen erzeugt wird.

Ferner werden elektrische Verbraucher, welche ihre Leistung in Abhängigkeit von der Frequenz des Übertragungsnetzes aus diesem beziehen, wie beispielsweise direkt mit dem Übertragungsnetz gekoppelte Synchron- oder Asynchronmaschinen, mehr und mehr durch elektrische Verbraucher ersetzt, deren elektrische Antriebe mittels Wechselrichtern gespeist werden. Dabei ist eine Leistungsaufnahme dieser Verbraucher möglich, welche überquadratisch von der Frequenz abhängig ist.

Hierdurch ist die Wirksamkeit aus dem Stand der Technik bekannter Netzregelverfahren, welche beispielsweise darauf beruhen, dass elektrische Generatoren mit den elektrischen Verbrauchern in einem Gegenkopplungsverhältnis stehen, reduziert. Dabei werden die Generatoren gebremst, wenn die Leistungsentnahme aus dem Übertragungsnetz steigt. Somit sinken die Frequenz und Spannung des Übertragungsnetzes ab, was wie bereits erläutert bei elektrischen Verbrauchern mit ohmschem Verhalten im Gegensatz zu über Wechselrichter und/oder Schaltnetzteile betriebenen Verbrauchern zu einer Verringerung der aus dem Netz entnommenen elektrischen Leistung führt und infolge dessen zu einer Einstellung eines stabilen elektrischen Gleichgewichtes des Übertragungsnetzes führt.

Aus diesem Grund ist eine verstärkte Bereitstellung von so genannter Regelleistung, insbesondere anhand von Spitzenlastkraftwerken, erforderlich, deren Produktionskosten für elektrische Energie vergleichsweise hoch sind.

Da die Lastdynamik aus den genannten Gründen allein mit einer erzeugerseitigen Leistungsregelung kostenintensiv und sehr aufwändig ist, sind aus dem Stand der Technik verschiedene Vorrichtungen und Verfahren bekannt, welche die Lastdynamik insbesondere auch verbraucherseitig weiter verringern sollen.

Dabei ist allgemein bekannt, dass von Kunden des Energieverteilungssystems nicht genutzte Energiekapazitäten in Schwachlastzeiten als Nachtstrom zu vergünstigten Tarifen angeboten werden, so dass ein Teil der elektrischen Last in die Schwachlastzeiten verschoben wird. Somit wird während der Schwachlastzeiten eine Grundlast bereitgestellt und die elektrische Last zu Spitzenlastzeiten reduziert.

Zusätzlich ist aus der WO 2008/148418 ein Verfahren zum Betreiben einer Anordnung mit zumindest einer Energieverteileinrichtung, einer Mehrzahl an Energieverbrauchseinrichtungen und einem Übertragungsnetz, an das zumindest eine Energieverteileinrichtung und die Mehrzahl an Energieverbrauchseinrichtungen angeschlossen sind, bekannt, welches eine Regelung der elektrischen Last in dem Übertragungsnetz durch die elektrischen Verbraucher, insbesondere eine Verschiebung der elektrischen Last in Schwachlastzeiten, ermöglichen soll. Dabei stehen die Energieverbrauchseinrichtungen und die Energieverteileinrichtung über eine Kommunikationseinrichtung mittelbar oder unmittelbar in Verbindung. Die Energieverteileinrichtung ermittelt eine jeweilige Netzlast oder Netzlastschwankungen des Übertragungsnetzes und zeitabhängig Energielieferbedingungen, so dass den Energieverbrauchseinrichtungen gemäß individuell für diese abgespeicherter Energieabnahmebedingungen individuell Energie bereitgestellt wird oder nicht.

Aus der DE 10 2008 048 046 A1 sind eine Vorrichtung und ein Verfahren zum Betreiben eines elektrischen Verbrauchers, welcher mit einem elektrischen Übertragungsnetz elektrisch gekoppelt ist, bekannt. Dabei ist zwischen den elektrischen Verbraucher und das Übertragungsnetz eine Steuereinheit geschaltet, welche Mittel zur Erfassung einer Netzspannung und/oder einer Netzfrequenz des Übertragungsnetzes umfasst, wobei mittels der Steuereinheit eine elektrische Leistungsentnahme des Verbrauchers aus dem Übertragungsnetz in Abhängigkeit von der erfassten Netzspannung und/oder Netzfrequenz steuerbar ist.

Weiterhin beschreibt die DE 10 2007 043 888 A1 eine Vorrichtung zur Versorgung mindestens eines elektrischen Verbrauchers, umfassend ein Versorgungsnetz mit mindestens einer Speisestelle, mindestens einer Versorgungseinheit und einer Anzahl von zumindest mit einer dieser Speisestellen über eine Übertragungseinheit verbundenen Entnahmestellen einer oder mehrerer Verbraucherabnahmestellen. Zumindest eine dieser Verbraucherabnahmestellen ist über eine Kommunikationsübertragungseinheit mit zumindest einer der Versorgungseinheiten verbunden, über die die Versorgung an der Entnahmestelle entnahmeseitig und/oder speiseseitig steuerbar ist. Weiterhin ist eine Verbraucherabnahmestelle dargestellt, welche mindestens eine zugehörige Entnahmenstelle zur Versorgung von mindestens einem zugehörigen Verbraucher und einen Datenspeicher umfasst, in welchem der oder die zugehörigen Verbraucher mit zugeordneten Versorgungsdaten, zugeordnetem Versorgungsereignis und/oder zugeordneter Versorgungszeit hinterlegt sind. Weiterhin ist eine Steuereinheit vorgesehen, mittels welcher die Versorgung an der Entnahmestelle steuerbar ist. Auch die Vorrichtung und die Verbraucherabnahmestelle sollen eine Regelung der elektrischen Last in dem Übertragungsnetz durch die elektrischen Verbraucher, insbesondere eine Verschiebung der elektrischen Last in Schwachlastzeiten, ermöglichen.

Ferner offenbart die US 2001/0010032 A1 ein Energie-Management-System, welches Mittel zu einer Visualisierung von elektrischen Lastverläufen eines oder mehrere elektrischer Verbraucher umfasst, welche mit diesem verbunden sind. Dabei besteht die Möglichkeit, dass ein Nutzer manuell Lastanteile der elektrischen Verbraucher in Schwachlastzeiten verschiebt oder Betriebszeiten der elektrischen Verbraucher vorgibt.

Aus der DE 394190 C ist eine Einrichtung zur Gleichhaltung der Belastung elektrischer Zentralen bekannt, bei welcher eine selbsttätige Änderung des Stromverbrauchs von Verbrauchern oder Verbrauchergruppen in Abhängigkeit von einer Netzfrequenz erfolgt. Es wird eine der Netzfrequenz verhältnisgleiche höhere Frequenz erzeugt, die ein den Stromverbrauch steuerndes Frequenzrelais beeinflusst. Bei einer Frequenzunterschreitung kommt es zum so genannten Lastabwurf.

Weiterhin sind aus der CA 2,115,717 A1 eine Vorrichtung und ein Verfahren zur Reduzierung oder Erhöhung eines Verbrauchs von elektrischer Energie einer elektrischen Last bekannt.

Ferner sind so genannte "Current mode Gleichstromsteller" allgemein bekannt, mittels welchen eine überlagerte Spannungsregelung mit einer Stromregelung unterlagert wird, um eine Regelcharakteristik einer Anordnung zu verbessern, indem eine eigentliche Regelgröße, hier die elektrische Spannung, einer unterlagerten Regelgröße, hier dem Strom, mit Verzug nachfolgt.

Der Erfindung liegt die Aufgabe zugrunde, ein gegenüber dem Stand der Technik verbessertes Verfahren zur elektrischen Energieversorgung und eine Vorrichtung zur Durchführung des Verfahrens anzugeben, welche eine effiziente, einfach ausführbare und schnelle Regelung einer Stabilität eines elektrischen Energieversorgungsnetzes ermöglichen.

Hinsichtlich des Verfahrens wird die Aufgabe erfindungsgemäß durch die im Anspruch 1 angegebenen Merkmale und hinsichtlich der Vorrichtung durch die im Anspruch 6 angegebenen Merkmale gelöst.

Vorteilhafte Ausgestaltungen und Weiterbildungen der Erfindung sind Gegenstand der Unteransprüche.

In einem Verfahren zur elektrischen Energieversorgung zumindest eines Verbrauchers, wobei ein elektrisches Energieversorgungsnetz zumindest eine Versorgungseinheit mit dem zumindest einen Verbraucher verbindet und wobei der Verbraucher und/oder die Versorgungseinheit über eine Kommunikationsverbindung mit einem Netzregler des Energieversorgungsnetzes verbunden ist/sind, wird erfindungsgemäß einer Verbraucherreglereinheit des Verbrauchers vom Netzregler über die Kommunikationsverbindung eine Leistungsentnahmekennlinie vorgegeben. Die Verbraucherreglereinheit ermittelt eine Netzspannung und/oder Netzfrequenz und/oder Oberschwingungen des Energieversorgungsnetzes und regelt mittels der vorgegebenen Leistungsentnahmekennlinie eine elektrische Leistungsentnahme des Verbrauchers aus dem Energieversorgungsnetz in Abhängigkeit von der ermittelten Netzspannung und/oder Netzfrequenz und/oder von den ermittelten Oberschwingungen des Energieversorgungsnetzes. Dabei kann die Leistungsentnahmekennlinie mehrdimensional sein und Leistungsentnahmewerte und/oder Phasenwinkel, d. h. Phasenlagen oder Phasenverschiebungen der Leistungsentnahme, und/oder einen Frequenzgang, insbesondere auch einen Leistungsgehalt von Oberschwingungen in Abhängigkeit von der ermittelten Netzspannung und/oder Netzfrequenz und/oder von den ermittelten Oberschwingungen umfassen. Die Leistungsvorgaben setzen sich beispielsweise aus der Wirkleistung, der Scheinleistung und dem Leistungsgehalt der Oberschwingungen zusammen. Alternativ oder zusätzlich wird erfindungsgemäß einer Versorgungsreglereinheit der Versorgungseinheit vom Netzregler über die Kommunikationsverbindung eine Einspeiseleistungskennlinie vorgegeben und die Versorgungsreglereinheit ermittelt eine Netzspannung und/oder Netzfrequenz und/oder Oberschwingungen des Energieversorgungsnetzes und regelt mittels der vorgegebenen Einspeiseleistungskennlinie eine elektrische Einspeiseleistung der Versorgungseinheit in das Energieversorgungsnetz in Abhängigkeit von der ermittelten Netzspannung und/oder Netzfrequenz und/oder von den ermittelten Oberschwingungen des Energieversorgungsnetzes. Dabei kann die Einspeiseleistungskennlinie mehrdimensional sein und Einspeiseleistungswerte und/oder Phasenwinkel, d. h. Phasenlagen oder Phasenverschiebungen der Einspeiseleistung, und/oder einen Frequenzgang, insbesondere auch einen Leistungsgehalt von Oberschwingungen in Abhängigkeit von der ermittelten Netzspannung und/oder Netzfrequenz und/oder von den ermittelten Oberschwingungen umfassen. Die Leistungsvorgaben setzen sich beispielsweise aus der Wirkleistung, der Scheinleistung und dem Leistungsgehalt der Oberschwingungen zusammen.

Die Übertragung der Leistungsentnahmekennlinie vom Netzregler an den Verbraucher, genauer gesagt an dessen Verbraucherreglereinheit, und/oder die Übertragung der Einspeiseleistungskennlinie vom Netzregler an die Versorgungseinheit, genauer gesagt an deren Versorgungsreglereinheit, kann dabei in vorgegebenen konstanten oder zeitlich veränderlichen Abständen oder ereignisbezogen erfolgen. Dabei wird die Leistungsentnahmekennlinie bzw. die Einspeiseleistungskennlinie jeweils an aktuelle und/oder zukünftige Gegebenheiten und Erfordernisse angepasst. Werden beispielsweise Windkraftanlagen und/oder Solaranlagen als Versorgungseinheiten verwendet, so können die Leistungsentnahmekennlinien an die Verbraucher und/oder die Einspeiseleistungskennlinien an die Versorgungseinheiten beispielsweise in Abhängigkeit von jeweiligen aktuellen und/oder insbesondere von jeweiligen prognostizierten Wetterbedingungen vorgegeben werden.

Dabei kann bei einer Mehrzahl von Verbrauchern und/oder Versorgungseinheiten jedem Verbraucher bzw. jeder Versorgungseinheit eine eigene Leistungsentnahmekennlinie bzw. Einspeiseleistungskennlinie vorgegeben werden, welche spezifisch an den jeweiligen Verbraucher bzw. an die jeweilige Versorgungseinheit angepasst ist, oder es kann eine Leistungsentnahmekennlinie bzw. Einspeiseleistungskennlinie beispielsweise an eine Gruppe gleicher oder ähnlicher Verbraucher bzw. Versorgungseinheiten übertragen werden oder alle mit dem Netzregler verbundenen Verbraucher bzw. Versorgungseinheiten, welche eine Verbraucherreglereinheit bzw. eine Versorgungsreglereinheit aufweisen, erhalten von diesem die gleiche Leistungsentnahmekennlinie bzw. Einspeiseleistungskennlinie. Dies ist beispielsweise abhängig von einer Art und Anzahl der Verbraucher und/oder Versorgungseinheiten im Energieversorgungsnetz und/oder von einer zur Verfügung stehenden Übertragungsleistung der Kommunikationsverbindung.

Durch die Übertragung der Leistungsentnahmekennlinie bzw. der Einspeiseleistungskennlinie, welche solange gültig ist, bis eine neue Leistungsentnahmekennlinie bzw. Einspeiseleistungskennlinie übertragen wird, beispielsweise mehrere Stunden, Tage oder Wochen, kann die Regelung des oder der Verbraucher und/oder der Versorgungseinheit oder der Mehrzahl von Versorgungseinheiten mit einer sehr geringen Kommunikationsübertragungskapazität optimiert werden, da nicht ständig Steuerungs- und/oder Regelungssignale vom Netzregler an jeden einzelnen Verbraucher bzw. jede einzelne Versorgungseinheit übertragen werden müssen, um den Verbraucher bzw. die Versorgungseinheit zu regeln. Es wird lediglich die Leistungsentnahmekennlinie bzw. die Einspeiseleistungskennlinie übertragen und die Regelung anhand der jeweiligen Kennlinie erfolgt dann dezentral von der jeweiligen Verbraucherreglereinheit bzw. Versorgungsreglereinheit.

Auf diese Weise wird eine sehr schnelle Regelung des Verbrauchers bzw. der Versorgungseinheit anhand der jeweiligen Kennlinie und dadurch eine sehr schnelle Reaktion auf eine Veränderung der Netzspannung und/oder der Netzfrequenz und/oder der Oberschwingungen ermöglicht, wodurch das Energieversorgungsnetz schnell und effizient stabilisiert werden kann. Durch das Verfahren werden Regelungsverzögerungen vermieden, die bei einer direkten Regelung durch den Netzregler über die Kommunikationsverbindung auftreten würden. Durch die Regelung über die vorgegebene Kennlinie wird eine sofortige Reaktion auf Lastveränderungen des Energieversorgungsnetzes ermöglicht, d. h. auf Veränderungen der Netzspannung und/oder Netzfrequenz und/oder der Oberschwingungen. Des Weiteren kann die Regelung auch beispielsweise bei einem Ausfall des Netzreglers aufrecht erhalten werden, da die jeweilige Kennlinie im Verbraucher bzw. in der Versorgungseinheit weiterhin vorliegt. Es wird dann lediglich keine neue Kennlinie mehr übertragen. Auf diese Weise bleibt auch bei einem Ausfall des Netzreglers die Netzstabilität erhalten.

Zudem wird eine Überlastung der Kommunikationsverbindung bzw. eines Kommunikationsverbindungsnetzes insbesondere bei einer Vielzahl von mit dem Netzregler kommunikativ verbundenen Verbrauchern und/oder Versorgungseinheiten vermieden. D. h. das Verfahren ermöglicht die effiziente Regelung einer Vielzahl von Verbrauchern und/oder Versorgungseinheiten und eine schnelle Stabilisierung des Energieversorgungsnetzes unter Verwendung eines kostengünstigen Kommunikationsnetzes, welches nur eine relativ geringe Übertragungsleistung aufweisen muss, d. h. nur eine geringe Bandbreite. Als Kommunikationsverbindung ist auf diese Weise beispielsweise bereits eine zur Übertragung von Rundsteuersignalen bereits installierte Kommunikationsverbindung ausreichend.

Die Verbraucherreglereinheit kann in den Verbraucher oder in ein Gerät integriert sein, welches einen oder mehrere Verbraucher umfasst. Alternativ kann die Verbraucherreglereinheit auch als ein separates Vorschaltgerät ausgebildet sein, so dass in vorteilhafter Weise auch bereits vorhandene elektrische Verbraucher oder Geräte nachträglich mit der Verbraucherreglereinheit zur Regelung der Leistungsentnahme gekoppelt werden können. In diesem Fall ist der Netzregler über die Kommunikationsverbindung zweckmäßigerweise nicht direkt mit dem Verbraucher selbst verbunden, sondern mit dem Vorschaltgerät, um über die Kommunikationsverbindung eine Kommunikation zwischen dem Netzregler und der Verbraucherreglereinheit herzustellen und über diese eine Datenübertragung zu ermöglichen, d. h. die Übertragung von Leistungsentnahmekennlinien vom Netzregler an die Verbraucherreglereinheit.

Das Gleiche gilt analog auch für die Versorgungsreglereinheit und die Versorgungseinheit, wobei die Versorgungseinheit beispielsweise ein Großkraftwerk oder ein kleines Kraftwerk sein kann und mit fossilen oder regenerativen Energieträgern betrieben werden kann. Großkraftwerke sind beispielsweise Kohle-, Gas-, Öl-, Wasser- oder Atomkraftwerke. Kleine Kraftwerke, welche häufig dezentral betrieben werden, sind beispielsweise Solaranlagen, Windkraftanlagen oder Blockheizkraftwerke.

Des Weiteren können elektrische Anlagen oder Einrichtungen auch zeitweise als Verbraucher und zeitweise als Versorgungseinheiten betrieben werden. Ein klassisches Beispiel hierfür ist ein Pumpspeicherwerk. Mit einer zunehmenden Verbreitung von am Energieversorgungsnetz aufladbaren Elektrofahrzeugen kann dies jedoch auch auf diese zutreffen, d. h. elektrische Energiespeichereinheiten der Elektrofahrzeuge, welche mittels des Energieversorgungsnetzes geladen werden, können auch zur Stabilisierung des Energieversorgungsnetzes eingesetzt werden, durch eine Regelung von deren Leistungsentnahme oder durch Rückeinspeisung von in den Batterien gespeicherter elektrischer Energie in das Energieversorgungsnetz. In derartigen Fällen, in welchen elektrische Anlagen sowohl als Verbraucher als auch als Energieversorgungseinheit betrieben werden können, ist die Verbraucherreglereinheit vorzugsweise auch als Versorgungsreglereinheit ausgebildet oder diese Anlagen weisen eine Verbraucherreglereinheit und eine Versorgungsreglereinheit auf.

Die Versorgungsreglereinheit kann in die Versorgungseinheit oder in ein Gerät integriert sein, welches einen oder mehrere Versorgungseinheiten umfasst. Alternativ kann die Versorgungseinheit auch als ein separates Vorschaltgerät ausgebildet sein, so dass in vorteilhafter Weise auch bereits vorhandene elektrische Versorgungseinheiten nachträglich mit der Versorgungsreglereinheit zur Regelung der Einspeiseleistung gekoppelt werden können. In diesem Fall ist der Netzregler über die Kommunikationsverbindung zweckmäßigerweise nicht direkt mit der Versorgungseinheit selbst verbunden, sondern mit dem Vorschaltgerät, um über die Kommunikationsverbindung eine Kommunikation zwischen dem Netzregler und der Versorgungsreglereinheit herzustellen und über diese eine Datenübertragung zu ermöglichen, d. h. die Übertragung von Einspeiseleistungskennlinien vom Netzregler an die Versorgungsreglereinheit.

Das Energieversorgungsnetz kann neben derartigen Verbrauchern und Versorgungseinheiten, welche eine Verbraucherreglereinheit bzw. eine Versorgungsreglereinheit aufweisen oder mit einer solchen gekoppelt sind, auch andere Verbraucher und/oder andere Versorgungseinheiten aufweisen, welche beispielsweise direkt vom Netzregler gesteuert und/oder geregelt werden oder welche keine Kommunikationsverbindung zum Netzregler haben.

Mittels der Leistungsentnahmekennlinie bzw. der Einspeiseleistungskennlinie können ein Leistungsentnahme- bzw. Einspeiseleistungswert und/oder eine Phasenlage der Leistungsentnahme bzw. Einspeiseleistung und/oder ein Frequenzgang sowie ein Leistungsgehalt der Oberschwingungen zur Kompensation der Oberschwingungen im Energieversorgungsnetz geregelt werden. So kann beispielsweise, um die Netzfrequenz zu stabilisieren, mittels der über den Netzregler vorgegebenen Einspeiseleistungskennlinie in Abhängigkeit einer Auslastung der Versorgungseinheit eine Phasenlage der Versorgungseinheit relativ zum Energieversorgungsnetz eingestellt werden. So kann beispielsweise die Versorgungseinheit, insbesondere wenn sie nicht elektrodynamisch, sondern beispielsweise über Umrichter gekoppelt ist, ihre Einspeiseleistung relativ zum Energieversorgungsnetz nacheilend einspeisen, wenn sie am Leistungslimit betrieben wird, und voreilend einspeisen, wenn sie nahe des Leerlaufs betrieben wird. Wird eine Mehrzahl derartiger Versorgungseinheiten am Limit betrieben, führt dies zu einer Reduzierung der Netzfrequenz. Werden die Mehrzahl von Versorgungseinheiten nahe des Leerlaufs betrieben, führt dies analog zur Erhöhung der Netzfrequenz.

Das Maß der Nacheilung bzw. Voreilung wird dabei über die Einspeiseleistungskennlinie vom Netzregler vorgegeben. Dadurch ist die Netzfrequenz vom Verhältnis zwischen Leistungsangebot und Leistungsnachfrage im Energieversorgungsnetz entkoppelt. Auf diese Weise kann zum Beispiel auch bei einem permanenten Überangebot regenerativer Energie die mittlere Netzfrequenz bei 50 Hz gehalten werden.

Vorzugsweise werden die Leistungsentnahmekennlinie und/oder die Einspeiseleistungskennlinie in Abhängigkeit von einer historischen und/oder einer prognostizierten zukünftigen Einspeiseleistung in das Energieversorgungsnetz und/oder Leistungsentnahme aus dem Energieversorgungsnetz vorgegeben. Dies ist insbesondere bei einer zunehmenden Anzahl volatiler Energiequellen als Versorgungseinheiten, beispielsweise Solaranlagen und/oder Windkraftanlagen, sehr vorteilhaft, da die Leistungsentnahmekennlinie und/oder die Einspeiseleistungskennlinie beispielsweise in Abhängigkeit von prognostizierten Wetter- und/oder Sonnenscheinbedingungen vorgegeben werden kann. Des Weiteren kann die jeweilige Kennlinie beispielsweise auch an stattfindende Großereignisse, bei welchen mit einem erhöhten Energieverbrauch zu rechnen ist, angepasst werden. Zudem können auch historische Werte aus einer zurückliegenden Zeitperiode, beispielsweise vom Vortag oder der Vorwoche berücksichtigt werden. Auf diese Weise kann beispielsweise bei einer aufgrund sich verändernder Wetterbedingungen stark schwankenden Einspeiseleistung und einer sich dadurch verändernden Netzspannung und/oder Netzfrequenz und/oder sich verändernden oder erst dadurch auftretenden Oberschwingungen durch eine Regelung der Verbraucher, welche anhand der jeweils vorgegebenen Leistungsentnahmekennlinie mittels der jeweiligen Verbraucherreglereinheit sehr schnell und verzögerungsfrei erfolgt, das Versorgungsnetz in einem stabilen Zustand gehalten werden, d. h. innerhalb akzeptabler Grenzen der Netzspannung und Netzfrequenz und Oberschwingungen.

In einer vorteilhaften Ausführungsform wird die Leistungsentnahmekennlinie derart vorgegeben, dass die Leistungsentnahme des Verbrauchers zu einer Änderung der Netzspannung und/oder Netzfrequenz und/oder Oberschwingungen zeitlich verzögert, unverzögert oder mit einem kontinuierlichen Übergang verringert oder erhöht wird und/oder die Einspeiseleistungskennlinie wird derart vorgegeben, dass die Einspeiseleistung der Versorgungseinheit zu einer Änderung der Netzspannung und/oder Netzfrequenz und/oder Oberschwingungen zeitlich verzögert, unverzögert oder mit einem kontinuierlichen Übergang verringert oder erhöht wird.

Auch ist es bevorzugt möglich, dass die Leistungsentnahmekennlinie derart vorgegeben wird, dass die Leistungsentnahme des Verbrauchers bei einer Überschreitung oder Unterschreitung von vorgegebenen Grenzwerten der Netzspannung und/oder Netzfrequenz und/oder Oberschwingungen verringert oder erhöht wird und/oder dass die Einspeiseleistungskennlinie derart vorgegeben wird, dass die Einspeiseleistung der Versorgungseinheit bei einer Überschreitung oder Unterschreitung von vorgegebenen Grenzwerten der Netzspannung und/oder Netzfrequenz und/oder Oberschwingungen verringert oder erhöht wird.

Dabei wird in vorteilhafter Weise die Leistungsentnahmekennlinie derart vorgegeben, dass die Leistungsentnahme des Verbrauchers solange verringert oder erhöht wird, bis keine Überschreitung oder Unterschreitung vorgegebener Grenzwerte der Netzspannung und/oder Netzfrequenz und/oder Oberschwingungen vorliegt, die aktuelle Leistungsentnahme null ist und/oder die aktuelle Leistungsentnahme einer maximalen Leistung des Verbrauchers entspricht, und/oder die Einspeiseleistungskennlinie wird derart vorgegeben, dass die Einspeiseleistung der Versorgungseinheit solange verringert oder erhöht wird, bis keine Überschreitung oder Unterschreitung vorgegebener Grenzwerte der Netzspannung und/oder Netzfrequenz und/oder Oberschwingungen vorliegt, die aktuelle Einspeiseleistung null ist und/oder die aktuelle Einspeiseleistung einer maximalen Einspeiseleistung der Versorgungseinheit entspricht.

Bei einer Vorrichtung zur Durchführung eines Verfahrens zur elektrischen Energieversorgung zumindest eines Verbrauchers sind zumindest eine Versorgungseinheit und zumindest ein Verbraucher über ein elektrisches Energieversorgungsnetz verbunden und der Verbraucher und/oder die Versorgungseinheit sind über eine Kommunikationsverbindung mit einem Netzregler des Energieversorgungsnetzes verbunden. Erfindungsgemäß weist der Verbraucher eine Verbraucherreglereinheit auf, welche Mittel zur Ermittlung einer Netzspannung und/oder einer Netzfrequenz und/oder von Oberschwingungen des Energieversorgungsnetzes umfasst. Der Verbraucherreglereinheit ist vom Netzregler über die Kommunikationsverbindung eine Leistungsentnahmekennlinie vorgebbar. Mittels der vorgegebenen Leistungsentnahmekennlinie ist von der Verbraucherreglereinheit eine elektrische Leistungsentnahme des Verbrauchers aus dem Energieversorgungsnetz in Abhängigkeit von der ermittelten Netzspannung und/oder Netzfrequenz und/oder von den ermittelten Oberschwingungen des Energieversorgungsnetzes regelbar. Dabei kann die Leistungsentnahmekennlinie mehrdimensional sein und Leistungsentnahmewerte und/oder Phasenwinkel, d. h. Phasenlagen oder Phasenverschiebungen der Leistungsentnahme, und/oder einen Frequenzgang, insbesondere auch einen Leistungsgehalt von Oberschwingungen in Abhängigkeit von der ermittelten Netzspannung und/oder Netzfrequenz und/oder von den ermittelten Oberschwingungen umfassen. Die Leistungsvorgaben setzen sich beispielsweise aus der Wirkleistung, der Scheinleistung und dem Leistungsgehalt der Oberschwingungen zusammen. Alternativ oder zusätzlich weist die Versorgungseinheit erfindungsgemäß eine Versorgungsreglereinheit auf, welche Mittel zur Ermittlung einer Netzspannung und/oder einer Netzfrequenz und/oder von Oberschwingungen des Energieversorgungsnetzes umfasst. Der Versorgungsreglereinheit ist vom Netzregler über die Kommunikationsverbindung eine Einspeiseleistungskennlinie vorgebbar, wobei von der Versorgungsreglereinheit mittels der vorgegebenen Einspeiseleistungskennlinie eine elektrische Einspeiseleistung der Versorgungseinheit in das Energieversorgungsnetz in Abhängigkeit von der ermittelten Netzspannung und/oder Netzfrequenz und/oder von den ermittelten Oberschwingungen des Energieversorgungsnetzes regelbar ist. Dabei kann die Einspeiseleistungskennlinie mehrdimensional sein und Einspeiseleistungswerte und/oder Phasenwinkel, d. h. Phasenlagen oder Phasenverschiebungen der Einspeiseleistung, und/oder einen Frequenzgang, insbesondere auch einen Leistungsgehalt von Oberschwingungen in Abhängigkeit von der ermittelten Netzspannung und/oder Netzfrequenz und/oder von den ermittelten Oberschwingungen umfassen. Die Leistungsvorgaben setzen sich beispielsweise aus der Wirkleistung, der Scheinleistung und dem Leistungsgehalt der Oberschwingungen zusammen.

Mittels der Vorrichtung, mit welcher das oben beschriebene Verfahren durchführbar ist, sind die bereits zum Verfahren geschilderten Vorteile erzielbar. Insbesondere ist zur Übertragung der jeweiligen Kennlinie bereits eine Kommunikationsverbindung mit einer geringen Bandbreite ausreichend, so dass beispielsweise eine Kommunikationsverbindung zur Übertragung von Rundsteuersignalen verwendbar ist. Es ist lediglich die Leistungsentnahmekennlinie bzw. die Einspeiseleistungskennlinie zu übertragen und die Regelung anhand der jeweiligen Kennlinie erfolgt dann dezentral von der jeweiligen Verbraucherreglereinheit bzw. Versorgungsreglereinheit.

Dies ermöglicht eine sehr schnelle Regelung des Verbrauchers bzw. der Versorgungseinheit anhand der jeweiligen Kennlinie und dadurch eine sehr schnelle Reaktion auf eine Veränderung der Netzspannung und/oder der Netzfrequenz und/oder der Oberschwingungen des Energieversorgungsnetzes, wodurch dieses schnell und effizient stabilisierbar ist.

Wie bereits beschrieben, kann die Verbraucherreglereinheit in den Verbraucher oder in ein Gerät integriert sein, welches einen oder mehrere Verbraucher umfasst. Alternativ kann die Verbraucherreglereinheit auch als ein separates Vorschaltgerät ausgebildet sein, so dass in vorteilhafter Weise auch bereits vorhandene elektrische Verbraucher oder Geräte nachträglich mit der Verbraucherreglereinheit zur Regelung der Leistungsentnahme gekoppelt werden können.

Das Gleiche gilt analog auch für die Versorgungsreglereinheit und die Versorgungseinheit, wobei die Versorgungseinheit in der bereits beschriebenen Form ausgebildet sein kann und wobei, wie bereits beschrieben, auch Anlagen möglich sind, welche zeitweilig als Versorgungseinheit und zeitweilig als Verbraucher fungieren. Die Versorgungsreglereinheit kann in die Versorgungseinheit oder in ein Gerät integriert sein, welches einen oder mehrere Versorgungseinheiten umfasst. Alternativ kann die Versorgungseinheit auch als ein separates Vorschaltgerät ausgebildet sein, so dass in vorteilhafter Weise auch bereits vorhandene elektrische Versorgungseinheiten nachträglich mit der Versorgungsreglereinheit zur Regelung der Einspeiseleistung gekoppelt werden können.

Das Energieversorgungsnetz kann, wie bereits beschrieben, neben derartigen Verbrauchern und Versorgungseinheiten, welche eine Verbraucherreglereinheit bzw. eine Versorgungsreglereinheit aufweisen oder mit einer solchen gekoppelt sind, auch andere Verbraucher und/oder andere Versorgungseinheiten aufweisen, welche beispielsweise direkt vom Netzregler steuerbar und/oder regelbar sind oder welche keine Kommunikationsverbindung zum Netzregler haben.

In vorteilhafter Weise umfasst die Verbraucherreglereinheit und/oder die Versorgungsreglereinheit zur Regelung der Leistungsentnahme bzw. der Einspeiseleistung eine Schaltereinheit, in welcher zumindest ein Schalter angeordnet ist. Bei den Schaltern handelt es sich insbesondere um Schütze, Relais und/oder Halbleiterschalter, mittels welchen die Leistungsentnahme bzw. der Einspeiseleistung effektiv und einfach steuerbar ist.

Die Verbraucherreglereinheit und/oder die Versorgungsreglereinheit umfasst vorteilhafterweise einen oder mehrere Transformatoren, Hochsetzsteller und/oder Tiefsetzsteller zur Einstellung einer Betriebsspannung des elektrischen Verbrauchers bzw. einer Einspeisespannung der Versorgungseinheit.

Gemäß einer Gewinn bringenden Ausgestaltung umfassen die Verbraucherreglereinheit und/oder die Versorgungsreglereinheit einen oder mehrere Gleichrichter und/oder Filter zur Leistungsfaktorkorrektur.

Alternativ oder zusätzlich umfasst die Verbraucherreglereinheit und/oder die Versorgungsreglereinheit Mittel, welche zu einer Phasenanschnittsteuerung und/oder zu einer Phasenabschnittsteuerung vorgesehen sind. Dabei weisen die Phasenanschnittsteuerung und die Phasenabschnittsteuerung zur Steuerung der Leistungsentnahme bzw. der Einspeiseleistung insbesondere den Vorteil auf, dass sie durch eine sehr geringe Verlustleistung bei gleichzeitig einfachem und kleinbauendem Aufbau sowie einer geringen Störanfälligkeit gekennzeichnet sind.

Ausführungsbeispiele der Erfindung werden im Folgenden anhand einer Zeichnung näher erläutert.

Dabei zeigt:

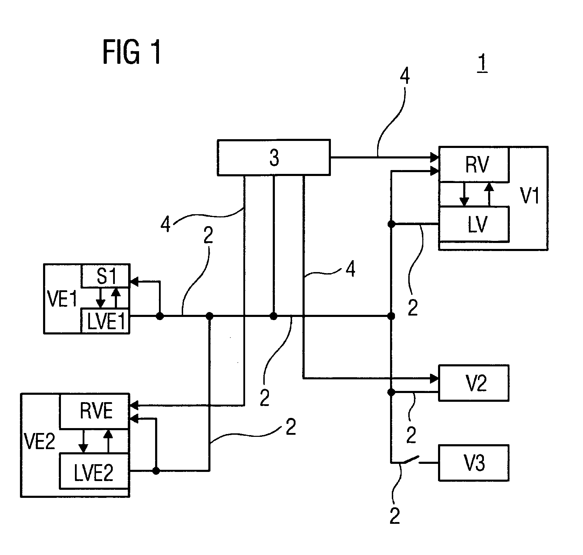

- FIG 1: schematisch eine Vorrichtung zur Durchführung eines Verfahrens zum Betrieb eines elektrischen Energieversorgungsnetzes.

Figur 1 zeigt schematisch eine Vorrichtung 1, mittels welcher ein Verfahren zum Betrieb eines elektrischen Energieversorgungsnetzes 2 durchführbar ist. Das Energieversorgungsnetz 2 verbindet im hier dargestellten stark vereinfachten Beispiel zwei Versorgungseinheiten VE1, VE2 mit drei Verbrauchern V1, V2, V3. Des Weiteren ist ein Netzregler 3 mit dem Energieversorgungsnetz 2 gekoppelt.

Der Netzregler 3 ist des Weiteren über eine Kommunikationsverbindung 4 mit einer Versorgungsreglereinheit RVE der zweiten Versorgungseinheit VE2 und mit einer Verbraucherreglereinheit RV des ersten Verbrauchers V1 verbunden. Zudem ist der Netzregler 3 über die Kommunikationsverbindung 4 mit dem zweiten Verbraucher V2 verbunden, um diesen direkt zu steuern und/oder zu regeln, da dieser keine eigene Steuerung oder Regelung aufweist. Die Kommunikationsverbindung 4, genauer gesagt ein Kommunikationsverbindungsnetzwerk, basiert beispielsweise auf drahtgebundener oder drahtloser Datenkommunikation, zum Beispiel über Telefonleitungen oder anderen Datenübertragungsleitungen oder über Funk unter Verwendung einer der bekannten Funktechnologien.

Die erste Versorgungseinheit VE1 ist beispielsweise ein Kraftwerk, welches mit einem fossilen Energielieferanten, zum Beispiel Kohle, Erdöl oder Erdgas betrieben wird. Die zweite Versorgungseinheit VE2 ist beispielsweise ein Kraftwerk, welches mit regenerativer Energie betrieben wird, zum Beispiel eine Windkraftanlage oder eine Solaranlage.

Die erste Versorgungseinheit VE1, welche über keine Kommunikationsverbindung 4 zum Netzregler 3 verfügt, weist eine Steuer- und/oder Regeleinheit S1 und einen ersten Einspeiseleistungssteller LVE1 auf. Die Steuer- und/oder Regeleinheit S1 ermittelt eine Netzspannung und/oder Netzfrequenz des Energieversorgungsnetzes 2 und regelt über den ersten Einspeiseleistungssteller LVE1 eine Einspeiseleistung der ersten Versorgungseinheit VE1 in das Energieversorgungsnetz 2 beispielsweise anhand einer statisch vorgegebenen Kennlinie in Abhängigkeit von der ermittelten Netzspannung und/oder Netzfrequenz des Energieversorgungsnetzes 2. Diese Kennlinie wird beispielsweise durch einen Hersteller, einen Betreiber oder ein Bedienpersonal des Kraftwerks vorgegeben.

Die Netzfrequenz ist an allen Stellen des Energieversorgungsnetzes 2 gleich, die Netzspannung ist abhängig von der örtlichen Verteilung der Last, absolut oder in Relation zur kumulativen Kapazität der Versorgungseinheiten VE1, VE2.

Die Versorgungsreglereinheit RVE der zweiten Versorgungseinheit VE2 verfügt über Mittel, mit denen sie die Netzspannung und/oder Netzfrequenz und/oder Oberschwingungen des Energieversorgungsnetzes 2 ermittelt, und regelt über einen zweiten Einspeiseleistungssteller LVE2 eine Einspeiseleistung der zweiten Versorgungseinheit VE2 in das Energieversorgungsnetz 2 anhand einer dynamisch vorgegebenen Einspeiseleistungskennlinie in Abhängigkeit von der ermittelten Netzspannung und/oder Netzfrequenz und/oder von den ermittelten Oberschwingungen des Energieversorgungsnetzes 2, d. h. die Einspeiseleistungskennlinie wird der Versorgungsreglereinheit RVE vom Netzregler 3 über die Kommunikationsverbindung 4 beispielsweise in vorgegebenen gleichbleibenden oder veränderlichen Zeitabständen und/oder ereignisbezogen vorgegeben und auf diese Weise aktualisiert und an veränderte Bedingungen angepasst. Dabei kann die Einspeiseleistungskennlinie mehrdimensional sein und Einspeiseleistungswerte und/oder Phasenwinkel, d. h. Phasenlagen oder Phasenverschiebungen der Einspeiseleistung, und/oder einen Frequenzgang, insbesondere auch einen Leistungsgehalt von Oberschwingungen in Abhängigkeit von der ermittelten Netzspannung und/oder Netzfrequenz und/oder von den ermittelten Oberschwingungen umfassen. Die Leistungsvorgaben setzen sich beispielsweise aus der Wirkleistung, der Scheinleistung und dem Leistungsgehalt der Oberschwingungen zusammen.

Die Versorgungsreglereinheit RVE ermittelt aus der Einspeiseleistungskennlinie für einen jeweils ermittelten Netzspannungswert und/oder für einen jeweils ermittelten Netzfrequenzwert und/oder für einen jeweils ermittelten Oberschwingungswert eine Einspeiseleistung für die zweite Versorgungseinheit VE2 und gibt diese dem zweiten Einspeiseleistungssteller LVE2 als Sollwert vor, um die zweite Versorgungseinheit VE2 auf diese Einspeiseleistung einzustellen. Die Leistungsvorgaben setzen sich beispielsweise aus der Wirkleistung, der Scheinleistung und dem Leistungsgehalt der Oberschwingungen zusammen. Der zweite Einspeiseleistungssteller LVE2 übergibt die aktuell eingestellte Einspeiseleistung als Istwert an die Versorgungsreglereinheit RVE, in welcher ein Sollwert-Istwertabgleich durchgeführt wird, so dass die Einspeiseleistung entsprechend der jeweiligen Netzspannung und/oder Netzfrequenz und/oder entsprechend den jeweiligen Oberschwingungen geregelt werden kann.

Stellt die Versorgungsreglereinheit RVE erneut eine veränderte Netzspannung und/oder Netzfrequenz und/oder Veränderungen der Oberschwingungen des Energieversorgungsnetzes 2 fest, so wird anhand der Einspeiseleistungskennlinie ein entsprechender neuer Sollwert für die Einspeiseleistung der zweiten Versorgungseinheit VE2 ermittelt und dem zweiter Einspeiseleistungssteller LVE2 als Sollwert vorgegeben.

So wird, wenn die Netzspannung und/oder die Netzfrequenz über einem vorgegebenen Wert liegen, die Einspeiseleistung der zweiten Versorgungseinheit VE2 reduziert und, wenn die Netzspannung und/oder die Netzfrequenz unter einem vorgegebenen Wert liegen, die Einspeiseleistung der zweiten Versorgungseinheit VE2 erhöht. Durch diese Regelung der Einspeiseleistung ist das Energieversorgungsnetz 2 sehr schnell und effizient in einem vorgegebenen Netzspannungs- und Netzfrequenzbereich zu stabilisieren.

Alternativ oder zusätzlich kann mittels der über den Netzregler 3 vorgegebenen Einspeiseleistungskennlinie beispielsweise in Abhängigkeit einer Auslastung der zweiten Versorgungseinheit VE2 eine Phasenlage der zweiten Versorgungseinheit VE2 relativ zum Energieversorgungsnetz 2 eingestellt werden. So kann beispielsweise die zweite Versorgungseinheit VE2, insbesondere wenn sie nicht elektrodynamisch, sondern beispielsweise über Umrichter gekoppelt ist, ihre Einspeiseleistung relativ zum Energieversorgungsnetz 2 nacheilend einspeisen, wenn sie am Leistungslimit betrieben wird, und voreilend einspeisen, wenn sie nahe des Leerlaufs betrieben wird. Wird eine Mehrzahl derartiger zweiter Versorgungseinheiten VE2 am Limit betrieben, führt dies zu einer Reduzierung der Netzfrequenz. Werden die Mehrzahl zweiter Versorgungseinheiten VE2 nahe des Leerlaufs betrieben, führt dies analog zur Erhöhung der Netzfrequenz.

Das Maß der Nacheilung bzw. Voreilung wird dabei über die Einspeiseleistungskennlinie vom Netzregler 3 vorgegeben. Dadurch ist die Netzfrequenz vom Verhältnis zwischen Leistungsangebot und Leistungsnachfrage im Energieversorgungsnetz 2 entkoppelt. Auf diese Weise kann zum Beispiel auch bei einem permanenten Überangebot regenerativer Energie die mittlere Netzfrequenz bei 50 Hz gehalten werden.

Des Weiteren können durch entsprechende Einspeiseleistungsvorgaben, insbesondere durch Vorgabe von Leistungswerten der Oberschwingungen, auch im Energieversorgungsnetz 2 auftretende Oberschwingungen kompensiert werden.

Die Verbraucherreglereinheit RV des ersten Verbrauchers V1 verfügt über Mittel, mit denen sie die Netzspannung und/oder Netzfrequenz und/oder Oberschwingungen des Energieversorgungsnetzes 2 ermittelt, und regelt über einen Leistungsentnahmesteller LV eine Leistungsentnahme des ersten Verbrauchers V1 aus dem Energieversorgungsnetz 2 anhand einer dynamisch vorgegebenen Leistungsentnahmekennlinie in Abhängigkeit von der ermittelten Netzspannung und/oder Netzfrequenz und/oder von ermittelten Oberschwingungen des Energieversorgungsnetzes 2, d. h. die Leistungsentnahmekennlinie wird der Versorgungsreglereinheit RVE vom Netzregler 3 über die Kommunikationsverbindung 4 beispielsweise in vorgegebenen gleichbleibenden oder veränderlichen Zeitabständen und/oder ereignisbezogen vorgegeben und auf diese Weise aktualisiert und an veränderte Bedingungen angepasst.

Die Verbraucherreglereinheit RV ermittelt aus der Leistungsentnahmekennlinie für einen jeweils ermittelten Netzspannungswert und/oder für einen jeweils ermittelten Netzfrequenzwert und/oder für einen jeweils ermittelten Oberschwingungswert eine Leistungsentnahme für den ersten Verbraucher V1 und gibt diese dem Leistungsentnahmesteller LV als Sollwert vor, um den ersten Verbraucher V1 auf diese Leistungsentnahme einzustellen. Der Leistungsentnahmesteller LV übergibt eine aktuell eingestellte Leistungsentnahme als Istwert an die Verbraucherreglereinheit RV, in welcher ein Sollwert-Istwertabgleich durchgeführt wird, so dass die Leistungsentnahme entsprechend der jeweiligen Netzspannung und/oder Netzfrequenz und/oder entsprechend den jeweiligen Oberschwingungen geregelt werden kann. Stellt die Verbraucherreglereinheit RV erneut eine veränderte Netzspannung und/oder Netzfrequenz und/oder veränderte Oberschwingungen des Energieversorgungsnetzes 2 fest, so wird anhand der Leistungsentnahmekennlinie ein entsprechender neuer Sollwert für die Leistungsentnahme des ersten Verbrauchers V1 ermittelt und dem Leistungsentnahmesteller LV als Sollwert vorgegeben.

Die Leistungsentnahmekennlinie kann mehrdimensional sein und Leistungsentnahmewerte und/oder Phasenwinkel, d. h. Phasenlagen oder Phasenverschiebungen der Leistungsentnahme, und/oder einen Frequenzgang, insbesondere auch einen Leistungsgehalt von Oberschwingungen in Abhängigkeit von der ermittelten Netzspannung und/oder Netzfrequenz und/oder von den ermittelten Oberschwingungen umfassen. Die Leistungsvorgaben setzen sich beispielsweise aus der Wirkleistung, der Scheinleistung und dem Leistungsgehalt der Oberschwingungen zusammen.

Mittels dieser Vorgaben der Leistungsentnahmekennlinie kann somit sowohl der Leistungsentnahmewert und die Phasenlage der Leistungsentnahme geregelt werden und es können des Weiteren durch die Regelungen der Leistungsentnahme auch Oberschwingungen im Energieversorgungsnetz 2 kompensiert werden.

Auf diese Weise wird, wenn die Netzspannung und/oder die Netzfrequenz und/oder die Oberschwingungen über einem vorgegebenen Wert liegen, die Leistungsentnahme erhöht und, wenn die Netzspannung und/oder die Netzfrequenz und/oder die Oberschwingungen unter einem vorgegebenen Wert liegen, die Leistungsentnahme reduziert. Durch diese Regelung der Leistungsentnahme ist das Energieversorgungsnetz 2 sehr schnell und effizient in einem vorgegebenen Netzspannungs- und Netzfrequenzbereich und Oberschwingungsbereich zu stabilisieren. Für eine derartige Regelung eignen sich insbesondere elektrische Einrichtungen, welche auch mit weniger Leistung betrieben werden können, zum Beispiel eine Heizung einer Waschmaschine. Der Betrieb mit einer geringeren Leistung würde lediglich zu einer Verlängerung eines Waschvorganges führen.

Zur Variation der Leistungsentnahme des ersten Verbrauchers V1 kann der Leistungsentnahmesteller LV als eine Schaltereinheit ausgebildet sein, in welcher ein oder mehrere Schalter angeordnet sind. Alternativ oder zusätzlich kann der Leistungsentnahmesteller LV als ein Wandler mit ein oder mehreren Transformatoren, Hochsetzstellern und oder Tiefsetzstellern ausgebildet sein, wobei die Hochsetzsteller und/oder Tiefsetzsteller Gleichrichter und/oder Filter zur Leistungsfaktorkorrektur umfassen können. Der Wandler ist zu einer Variation der elektrischen Spannung des ersten Verbrauchers V1 vorgesehen, wobei über die Einstellung der elektrischen Spannung die Leistungsentnahme des ersten Verbrauchers V1 steuerbar ist. Somit ergibt sich bei vermindertem elektrischem Strom und/oder verminderter Spannung eine ebenfalls verminderte Leistungsentnahme und bei Erhöhung der Spannung eine Vergrößerung der Leistungsentnahme des ersten Verbrauchers V1.

Alternativ oder zusätzlich kann der Leistungsentnahmesteller LV ein Mittel zu einer Phasenanschnittsteuerung umfassen. Mittels dieser Phasenanschnittsteuerung ist die Leistungsentnahme des ersten Verbrauchers V1 anhand einer Beeinflussung dessen Betriebsstromflusses steuerbar, wobei zur Realisierung der Phasenanschnittsteuerung lediglich ein geringer Bauteilbedarf besteht und die verwendeten Bauteile sich durch eine geringe Störanfälligkeit auszeichnen.

Je nach Anwendungsfall bzw. je nach Art und Ausführung des ersten Verbrauchers V1 kann dessen Abhängigkeit der Leistungsentnahme von der Netzspannung und/oder Netzfrequenz und/oder von den Oberschwingungen unterschiedlich sein. Dabei kann dessen Leistungsverhalten beispielsweise proportional oder stufenweise von den Netzgrößen Netzspannung und/oder Netzfrequenz und/oder Oberschwingungen abhängen. Auch weisen verschieden ausgebildete erste Verbraucher V1 ein unterschiedliches Lastverhalten auf.

Somit wirken sich Veränderungen der elektrischen Betriebsgrößen, wie Strom, Spannung bzw. Leistung des ersten Verbrauchers V1 je nach dessen Ausbildung, beispielsweise als Fernsehgerät oder als Leuchtmittel, unterschiedlich auf dessen Verhalten aus. Aufgrund dessen wird vorteilhafterweise eine speziell an den jeweiligen ersten Verbraucher V1 angepasste Leistungsentnahmekennlinie vom Netzregler 3 an den jeweiligen ersten Verbraucher V1 übermittelt.

Dabei kann die Leistungsentnahmekennlinie beispielsweise derart vorgegeben werden, dass die Leistungsentnahme des ersten Verbrauchers V1 in Bezug zum Zeitpunkt der Änderung der Netzspannung und/oder Netzfrequenz und/oder der Oberschwingungen zeitlich verzögert, unverzögert oder mit einem kontinuierlichen Übergang verringert oder erhöht wird.

Handelt es sich bei dem ersten Verbraucher V1 z. B. um einen handelsüblichen Kühlschrank, so ist es sinnvoll, bei einer relativ hohen Innentemperatur dessen Leistungsentnahme konstant zu halten und somit erst zeitlich verzögert zu reduzieren, wenn dessen Innentemperatur einen vorgegebenen Grenzwert unterschreitet. Weist der Kühlschrank jedoch während einer Unterschreitung der Netzspannung und/oder Netzfrequenz unter einen vorgegebenen Wert eine Innenraumtemperatur auf, welche unterhalb dieses Grenzwertes liegt, ist eine unverzögerte Verringerung der Leistungsminimierung sinnvoll. Auch ist bei einem Ansteigen der Innenraumtemperatur über den Grenzwert bei anhaltender verringerter Netzspannung und/oder Netzfrequenz eine Erhöhung der Leistungsentnahme möglich.

Handelt es sich bei dem ersten Verbraucher V1 beispielsweise um einen Herd, ist eine Absenkung der Leistungsentnahme bei verringerter Netzspannung und/oder Netzfrequenz nur in begrenztem Maße erwünscht, da eine Zubereitung von Speisen vorzugsweise in einer angemessenen und für den Nutzer gewohnten Zeitdauer erfolgen sollte.

Die Anpassung der Leistungsentnahme mit einem kontinuierlichen Übergang, d. h. mit einem so genannten PT1-Verhalten, eignet sich insbesondere bei einer Ausbildung des ersten Verbrauchers V1 als Fernsehgerät. Dabei reduziert bzw. erhöht sich eine Helligkeit des von diesem ausgestrahlten Bildes in Abhängigkeit von der Variation der Leistungsentnahme nur langsam und somit für einen Betrachter kaum merklich, so dass dessen Komfort nicht eingeschränkt wird. Auch bei einer Leselampe bietet sich die Variation der Leistungsentnahme mit diesem Verhalten an, da sonst unangenehme Flickererscheinungen auftreten können.

Bei Lichtquellen, welche beispielsweise als Hintergrund- oder Orientierungsbeleuchtungen vorgesehen sind, ist eine unverzögerte Anpassung der Leistungsentnahme denkbar, da Helligkeitsveränderungen derartiger Beleuchtungen im Allgemeinen nicht als negativ empfunden werden. Weiterhin ist es auch sinnvoll, die Leistungsentnahme des ersten Verbrauchers V1 bei einer Überschreitung oder Unterschreitung von vorgegebenen Grenzwerten der Netzspannung und/oder Netzfrequenz zu erhöhen bzw. zu verringern. Somit kann die Leistungsentnahme des ersten Verbrauchers V1 insbesondere bei kurzzeitigen und geringen Schwankungen der Netzspannung und/oder Netzfrequenz, wie sie häufiger auftreten, konstant gehalten werden. Die Leistungsentnahme wird dabei vorzugsweise nur solange verringert oder erhöht, bis keine Über- bzw. Unterschreitung der Grenzwerte mehr vorliegt, die aktuelle Leistungsentnahme des ersten Verbrauchers V1 null ist oder der maximalen Leistungsentnahme des ersten Verbrauchers V1 entspricht, so dass Schäden an dem ersten Verbraucher V1 vermieden werden.

Aus den geschilderten Beispielen wird deutlich, dass es sinnvoll ist, eine an den jeweiligen ersten Verbraucher V1 und dessen spezifische Eigenschaften angepasste Leistungsentnahmekennlinie vom Netzregler 3 über die Kommunikationsverbindung 4 an den ersten Verbraucher V1 zu übermitteln. Dies gilt zweckmäßigerweise analog für die zweite Versorgungseinheit VE2.

Vorzugsweise werden die Leistungsentnahmekennlinie für den oder die ersten Verbraucher V1 und/oder die Einspeiseleistungskennlinie für die zweite Versorgungseinheit VE2 in Abhängigkeit von einer historischen und/oder einer prognostizierten zukünftigen Einspeiseleistung in das Energieversorgungsnetz 2 und/oder Leistungsentnahme aus dem Energieversorgungsnetz 2 vorgegeben. Es ist insbesondere bei einer zunehmenden Anzahl volatiler Energiequellen, beispielsweise Solaranlagen und/oder Windkraftanlagen, sehr vorteilhaft, die Leistungsentnahmekennlinie und/oder die Einspeiseleistungskennlinie beispielsweise in Abhängigkeit von prognostizierten Wetter- und/oder Sonnenscheinbedingungen vorzugeben. Des Weiteren kann die jeweilige Kennlinie beispielsweise auch an stattfindende Großereignisse, bei welchen mit einem erhöhten Energieverbrauch zu rechnen ist, angepasst werden. Zudem können auch historische Werte aus einer zurückliegenden Zeitperiode, beispielsweise vom Vortag oder der Vorwoche berücksichtigt werden. Auf diese Weise kann beispielsweise bei einer aufgrund sich verändernder Wetterbedingungen stark schwankenden Einspeiseleistung und einer sich dadurch verändernden Netzspannung und/oder Netzfrequenz und/oder sich verändernden oder dadurch erst auftretenden Oberschwingungen durch eine Regelung der ersten Verbraucher V1, welche anhand der jeweils vorgegebenen Leistungsentnahmekennlinie mittels der jeweiligen Verbraucherreglereinheit RV sehr schnell und Verzögerungsfrei erfolgt, das Energieversorgungsnetz 2 in einem stabilen Zustand gehalten werden, d. h. innerhalb akzeptabler Grenzen der Netzspannung und Netzfrequenz.

Der zweite Verbraucher V2 wird über die Kommunikationsverbindung 4 direkt vom Netzregler 3 gesteuert und/oder geregelt, da dieser keine eigene Steuerung oder Regelung aufweist. D. h. der Netzregler 3 ermittelt die Netzspannung und/oder Netzfrequenz und gegebenenfalls Oberschwingungen des Energieversorgungsnetzes 2 und ermittelt daraus bei einer Abweichung von vorgegebenen Werten oder Wertebereichen einen Sollwert der Leistungsentnahme für den zweiten Verbraucher V2 und übermittelt diesen Sollwert über die Kommunikationsverbindung 4 an den zweiten Verbraucher V2.

Dies hat gegenüber der für den ersten Verbraucher V1 verwendeten Lösung den Nachteil, dass die Datenübertragung über die Kommunikationsverbindung 4 Zeit kostet, so dass die Anpassung des zweiten Verbrauchers V2 deutlich langsamer erfolgt als die Anpassung des ersten Verbrauchers V1, welcher die Ermittlung des jeweiligen Sollwertes mit seiner eigenen Verbraucherreglereinheit RV anhand der vorgegebenen Leistungsentnahmekennlinie selbst durchführt. Während dieser Verzögerung aufgrund der Datenübertragung könnten sich die Netzspannung und/oder Netzfrequenz und/oder Oberschwingungen des Energieversorgungsnetzes 2 bereits wieder geändert haben, so dass eine schnelle und effiziente Stabilisierung des Energieversorgungsnetzes 2, wenn ausschließlich derartig ausgebildete zweite Verbraucher V2 genutzt werden würden, nicht möglich wäre.

Diese verzögerte Regelung des zweiten Verbrauchers V2 aufgrund der Verzögerungen während der Datenübertragung könnte im Extremfall sogar kontraproduktiv auf die Netzstabilität wirken, wenn sich beispielsweise die Netzspannung und/oder Netzfrequenz und/oder Oberschwingungen in der Zwischenzeit schon verändert und beispielsweise bereits stabilen Werten angenähert haben. Zudem ist, insbesondere bei einer hohen Anzahl derartiger zweiter Verbraucher V2, eine hohe Bandbreite der Kommunikationsverbindung 4 erforderlich, um eine noch ausreichend schnelle und häufigen Datenübertragung zur Regelung der zweiten Verbraucher V2 zu ermöglichen.

Demgegenüber hat die Regelung des ersten Verbrauchers V1 und ebenfalls der zweiten Versorgungseinheit VE2, insbesondere wenn das Energieversorgungsnetz 2 eine Mehrzahl derartig ausgebildeter erster Verbraucher V1 und/oder zweiter Versorgungseinheiten VE2 aufweist, mittels der Leistungsentnahmekennlinie bzw. der Einspeiseleistungskennlinie, welche solange gültig ist, bis eine neue Leistungsentnahmekennlinie bzw. Einspeiseleistungskennlinie übertragen wird, beispielsweise mehrere Stunden, Tage oder Wochen, den Vorteil, dass die Regelung des oder der ersten Verbraucher V1 und/oder der zweiten Versorgungseinheit VE2 oder der Mehrzahl von zweiten Versorgungseinheiten VE2 mit einer sehr geringen Kommunikations- übertragungskapazität optimiert werden kann, da nicht ständig Steuerungs- und/oder Regelungssignale vom Netzregler 3 an jeden einzelnen der ersten Verbraucher V1 bzw. jede einzelne der zweiten Versorgungseinheit VE2 übertragen werden müssen, um den jeweiligen ersten Verbraucher V1 bzw. die jeweilige zweite Versorgungseinheit VE2 zu regeln. Es wird lediglich die Leistungsentnahmekennlinie bzw. die Einspeiseleistungskennlinie übertragen und die Regelung anhand der jeweiligen Kennlinie erfolgt dann dezentral von der jeweiligen Verbraucherreglereinheit RV bzw. Versorgungsreglereinheit RVE.

Auf diese Weise wird eine sehr schnelle Regelung der ersten Verbraucher V1 bzw. der zweiten Versorgungseinheiten VE2 anhand der jeweiligen Kennlinie und dadurch eine sehr schnelle Reaktion auf eine Veränderung der Netzspannung und/oder der Netzfrequenz und/oder Oberschwingungen ermöglicht, wodurch das Energieversorgungsnetz 2 schnell und effizient stabilisiert werden kann. Dadurch werden Regelungsverzögerungen vermieden, die beispielsweise bei der direkten Regelung durch des zweiten Verbrauchers V2 durch den Netzregler 3 über die Kommunikationsverbindung 4 auftreten. Durch die Regelung über die vorgegebene Kennlinie wird eine sofortige Reaktion auf Lastveränderungen des Energieversorgungsnetzes 2 ermöglicht, d. h. auf Veränderungen der Netzspannung und/oder Netzfrequenz.

Zudem wird eine Überlastung der Kommunikationsverbindung 4 bzw. des Kommunikationsverbindungsnetzes insbesondere bei einer Vielzahl von mit dem Netzregler 3 kommunikativ verbundenen erster Verbraucher 1 und/oder zweiter Versorgungseinheiten VE2 vermieden. D. h. es wird eine effiziente Regelung einer Vielzahl von ersten Verbrauchern V1 und/oder zweiten Versorgungseinheiten VE2 und eine schnelle Stabilisierung des Energieversorgungsnetzes 2 ermöglicht, unter Verwendung eines kostengünstigen Kommunikationsnetzes, welches nur eine relativ geringe Übertragungsleistung aufweisen muss, d. h. nur eine geringe Bandbreite. Als Kommunikationsverbindung 4 ist auf diese Weise beispielsweise bereits eine zur Übertragung von Rundsteuersignalen bereits installierte Kommunikationsverbindung 4 ausreichend.

Der dritte Verbraucher V3 ist nicht über die Kommunikationsverbindung 4 mit dem Netzregler 3 verbunden. Seine Leistungsentnahme wird auch nicht anderweitig geregelt, sondern er wird im hier dargestellten Beispiel mittels einer Schalteinheit mit dem Energieversorgungsnetz 2 verbunden, wenn er benötigt wird, und wieder vom Energieversorgungsnetz 2 getrennt, wenn er nicht mehr benötigt wird. Derartige dritte Verbraucher V3 sind insbesondere elektrische Geräte und Einrichtungen, welche eingeschaltet werden, wenn sie benötigt werden, und welche dann eine volle Leistungsaufnahme zum Betrieb erfordern. Jedoch sind auch insbesondere direkt, d. h. ohne Umrichter gekoppelte Motoren als derartige dritte Verbraucher V3 geeignet, da sie aufgrund ihrer Charakteristik, weniger Leistungsentnahme bei geringer Netzfrequenz, zusätzlich zur Stabilisierung des Energieversorgungsnetzes 2 beitragen und daher keine aufwändige Regelung benötigen.

Aufgrund der Ausbildung der Vorrichtung 1 und der Steuerung und/oder Regelung der einzelnen Verbraucher V1, V2, V3 und Versorgungseinheiten VE1, VE2 hat eine Änderung der Netzspannung und/oder Netzfrequenz und/oder Oberschwingungen, beispielsweise aufgrund eines Zuschaltens oder Abschaltens des dritten Verbrauchers V3 direkte Auswirkungen auf die beiden Versorgungseinheiten VE1, VE2 und den ersten Verbraucher V1, da diese die Veränderung der Netzspannung und/oder Netzfrequenz selbst ermitteln und ihre Einspeiseleistung bzw. Leistungsentnahme anhand der dynamisch vorgegebenen Einspeiseleistungskennlinie für die zweite Versorgungseinheit VE2 und anhand der dynamisch vorgegebenen Leistungsentnahmekennlinie für den ersten Verbraucher V1 sowie anhand der statisch vorgegebenen Einspeiseleistungskennlinie für die erste Versorgungseinheit VE1 selbst regeln. D. h. sie reagieren sehr schnell auf die veränderte Netzspannung und/oder Netzfrequenz und tragen dadurch zur Stabilisierung des Energieversorgungsnetzes 2 bei, so dass die Netzspannung und Netzfrequenz und Oberschwingungen innerhalb vorgegebener Grenzen gehalten werden.

Auf diese Weise wird die Netzstabilität des Energieversorgungsnetzes 2 erheblich verbessert. Die schnelle Reaktion wird insbesondere dadurch ermöglicht, dass die Netzfrequenz im Energieversorgungsnetz 2 überall gleich ist, so dass Veränderungen der Netzfrequenz sehr schnell und an allen Stellen des Energieversorgungsnetzes 2 gleichzeitig ermittelt werden können, worauf die beiden Versorgungseinheiten VE1, VE2 und der erste Verbraucher V1 sofort reagieren können. Der zweite Verbraucher V2 hingegen reagiert nur indirekt und dadurch zeitverzögert auf die Veränderung der Netzspannung und/oder Netzfrequenz und/oder Oberschwingungen, da er diese nicht selbst ermittelt und direkt darauf reagiert, sondern die veränderte Netzspannung und/oder Netzfrequenz und/oder die Veränderung der Oberschwingungen muss vom Netzregler 3 ermittelt werden und dem zweiten Verbraucher V2 danach ein entsprechender Sollwert für die Leistungsentnahme über die Kommunikationsverbindung 4 übermittelt werden.

Durch eine vorteilhafte Wahl und Übermittlung von Einspeiseleistungskennlinien und/oder Leistungsentnahmekennlinien vom Netzregler 3 an die zweite Versorgungseinheit VE2 bzw. den ersten Verbraucher V1 kann zusätzlich zur Stabilisierung des Energieversorgungsnetzes 2, wobei die Netzspannung und die Netzfrequenz sowie die Oberschwingungen innerhalb vorgegebener Grenzen gehalten werden, auch eine Verbesserung des Gangunterschiedes erreicht werden.

## Patentansprüche

1. Verfahren zur elektrischen Energieversorgung zumindest eines Verbrauchers (V1, V2, V3), wobei ein elektrisches Energieversorgungsnetz (2) zumindest eine Versorgungseinheit (VE1, VE2) mit dem zumindest einen Verbraucher (V1, V2, V3) verbindet und wobei der Verbraucher (V1, V2) und/oder die Versorgungseinheit (VE2) über eine Kommunikationsverbindung (4) mit einem Netzregler (3) des Energieversorgungsnetzes (2) verbunden ist/sind,
**dadurch gekennzeichnet, dass** einer Verbraucherreglereinheit (RV) des Verbrauchers (V1) vom Netzregler (3) über die Kommunikationsverbindung (4) eine Leistungsentnahmekennlinie vorgegeben wird, wobei die Verbraucherreglereinheit (RV) eine Netzspannung und/oder eine Netzfrequenz und/oder Oberschwingungen des Energieversorgungsnetzes (2) ermittelt und mittels der vorgegebenen Leistungsentnahmekennlinie eine elektrische Leistungsentnahme des Verbrauchers (V1) aus dem Energieversorgungsnetz (2) in Abhängigkeit von der ermittelten Netzspannung und/oder Netzfrequenz und/oder von den ermittelten Oberschwingungen des Energieversorgungsnetzes (2) regelt, und/oder dass einer Versorgungsreglereinheit (RVE) der Versorgungseinheit (VE2) vom Netzregler (3) über die Kommunikationsverbindung (4) eine Einspeiseleistungskennlinie vorgegeben wird, wobei die Versorgungsreglereinheit (RVE) eine Netzspannung und/oder Netzfrequenz und/oder Oberschwingungen des Energieversorgungsnetzes (2) ermittelt und mittels der vorgegebenen Einspeiseleistungskennlinie eine elektrische Einspeiseleistung der Versorgungseinheit (VE2) in das Energieversorgungsnetz (2) in Abhängigkeit von der ermittelten Netzspannung und/oder Netzfrequenz und/oder von den ermittelten Oberschwingungen des Energieversorgungsnetzes (2) regelt.

2. Verfahren nach Anspruch 1,
**dadurch gekennzeichnet, dass** die Leistungsentnahmekennlinie und/oder die Einspeiseleistungskennlinie in Abhängigkeit von einer historischen und/oder einer prognostizierten zukünftigen Einspeiseleistung in das Energieversorgungsnetz (2) und/oder Leistungsentnahme aus dem Energieversorgungsnetz (2) vorgegeben wird.

3. Verfahren nach Anspruch 1 oder 2,
**dadurch gekennzeichnet, dass** die Leistungsentnahmekennlinie derart vorgegeben wird, dass die Leistungsentnahme des Verbrauchers (V1) zu einer Änderung der Netzspannung und/oder Netzfrequenz und/oder Oberschwingungen zeitlich verzögert, unverzögert oder mit einem kontinuierlichen Übergang verringert oder erhöht wird und/oder dass die Einspeiseleistungskennlinie derart vorgegeben wird, dass die Einspeiseleistung der Versorgungseinheit (VE2) zu einer Änderung der Netzspannung und/oder Netzfrequenz und/oder Oberschwingungen zeitlich verzögert, unverzögert oder mit einem kontinuierlichen Übergang verringert oder erhöht wird.

4. Verfahren nach einem der Ansprüche 1 bis 3,
**dadurch gekennzeichnet, dass** die Leistungsentnahmekennlinie derart vorgegeben wird, dass die Leistungsentnahme des Verbrauchers (V1) bei einer Überschreitung oder Unterschreitung von vorgegebenen Grenzwerten der Netzspannung und/oder Netzfrequenz und/oder Oberschwingungen verringert oder erhöht wird und/oder dass die Einspeiseleistungskennlinie derart vorgegeben wird, dass die Einspeiseleistung der Versorgungseinheit (VE2) bei einer Überschreitung oder Unterschreitung von vorgegebenen Grenzwerten der Netzspannung und/oder Netzfrequenz und/oder Oberschwingungen verringert oder erhöht wird.

5. Verfahren nach einem der vorhergehenden Ansprüche,
**dadurch gekennzeichnet, dass** die Leistungsentnahmekennlinie derart vorgegeben wird, dass die Leistungsentnahme des Verbrauchers (V1) solange verringert oder erhöht wird, bis keine Überschreitung oder Unterschreitung vorgegebener Grenzwerte der Netzspannung und/oder Netzfrequenz und/oder Oberschwingungen vorliegt, die aktuelle Leistungsentnahme null ist und/oder die aktuelle Leistungsentnahme einer maximalen Leistung des Verbrauchers (V1) entspricht, und/oder dass die Einspeiseleistungskennlinie derart vorgegeben wird, dass die Einspeiseleistung der Versorgungseinheit (VE2) solange verringert oder erhöht wird, bis keine Überschreitung oder Unterschreitung vorgegebener Grenzwerte der Netzspannung und/oder Netzfrequenz und/oder Oberschwingungen vorliegt, die aktuelle Einspeiseleistung null ist und/oder die aktuelle Einspeiseleistung einer maximalen Einspeiseleistung der Versorgungseinheit (VE2) entspricht.

6. Vorrichtung (1) zur Durchführung eines Verfahrens nach einem der Ansprüche 1 bis 5, wobei zumindest eine Versorgungseinheit (VE1, VE2) und zumindest ein Verbraucher (V1, V2, V3) über ein elektrisches Energieversorgungsnetz (2) verbunden sind und wobei der Verbraucher (V1, V2) und/oder die Versorgungseinheit (VE2) über eine Kommunikationsverbindung (4) mit einem Netzregler (3) des Energieversorgungsnetzes (2) verbunden ist/sind,
**dadurch gekennzeichnet, dass** der Verbraucher (V1) eine Verbraucherreglereinheit (RV) aufweist, welche Mittel zur Ermittlung einer Netzspannung und/oder einer Netzfrequenz und/oder von Oberschwingungen des Energieversorgungsnetzes (2) umfasst und welcher vom Netzregler (3) über die Kommunikationsverbindung (4) eine Leistungsentnahmekennlinie vorgebbar ist, wobei von der Verbraucherreglereinheit (RV) mittels der vorgegebenen Leistungsentnahmekennlinie eine elektrische Leistungsentnahme des Verbrauchers (V1) aus dem Energieversorgungsnetz (2) in Abhängigkeit von der ermittelten Netzspannung und/oder Netzfrequenz und/oder von den ermittelten Oberschwingungen des Energieversorgungsnetzes (2) regelbar ist und/oder dass die Versorgungseinheit (VE2) eine Versorgungsreglereinheit (RVE) aufweist, welche Mittel zur Ermittlung einer Netzspannung und/oder einer Netzfrequenz und/oder von Oberschwingungen des Energieversorgungsnetzes (2) umfasst und welcher vom Netzregler (3) über die Kommunikationsverbindung (4) eine Einspeiseleistungskennlinie vorgebbar ist, wobei von der Versorgungsreglereinheit (RVE) mittels der vorgegebenen Einspeiseleistungskennlinie eine elektrische Einspeiseleistung der Versorgungseinheit (VE2) in das Energieversorgungsnetz (2) in Abhängigkeit von der ermittelten Netzspannung und/oder Netzfrequenz und/oder von den ermittelten Oberschwingungen des Energieversorgungsnetzes (2) regelbar ist.

7. Vorrichtung (1) nach Anspruch 6,
**dadurch gekennzeichnet, dass** die Verbraucherreglereinheit (RV) und/oder die Versorgungsreglereinheit (RVE) eine Schaltereinheit umfasst, in welcher zumindest ein Schalter angeordnet ist.

8. Vorrichtung (1) nach Anspruch 6 oder 7,
**dadurch gekennzeichnet, dass** die Verbraucherreglereinheit (RV) und/oder die Versorgungsreglereinheit (RVE) einen oder mehrere Transformatoren, Hochsetzsteller und/oder Tiefsetzsteller umfasst.

9. Vorrichtung (1) nach einem der Ansprüche 6 bis 8,
**dadurch gekennzeichnet, dass** die Verbraucherreglereinheit (RV) und/oder die Versorgungsreglereinheit (RVE) einen oder mehrere Gleichrichter und/oder Filter zur Leistungsfaktorkorrektur umfasst.

10. Vorrichtung (1) nach einem der Ansprüche 6 bis 9,
**dadurch gekennzeichnet, dass** die Verbraucherreglereinheit (RV) und/oder die Versorgungsreglereinheit (RVE) Mittel umfasst, welche zu einer Phasenanschnittsteuerung und/oder zu einer Phasenabschnittsteuerung vorgesehen sind.

## Claims

1. Method for the electric power supply of at least one consumer (V1, V2, V3), wherein an electric power supply network (2) connects at least one supply unit (VE1, VE2) to the at least one consumer (V1, V2, V3) and wherein the consumer (V1, V2) and/or the supply unit (VE2) is/are connected to a network controller (3) of the power supply network (2) via a communications link (4),
**characterised in that** a power drain characteristic is set for a consumer controller unit (RV) of the consumer (V1) by the network controller (3) via the communications link (4), wherein the consumer controller unit (RV) determines a line voltage and/or a line frequency and/or harmonics of the power supply network (2) and by means of the set power drain characteristic controls an electrical power drain of the consumer (V1) from the power supply network (2) as a function of the determined line voltage and/or line frequency and/or the determined harmonics of the power supply network (2), and/or that an infeed power characteristic is set for a supply controller unit (RVE) of the supply unit (VE2) by the network controller (3) via the communications link (4), wherein the supply controller unit (RVE) determines a line voltage and/or line frequency and/or harmonics of the power supply network (2) and by means of the set infeed power characteristic controls an electrical infeed power of the supply unit (VE2) into the power supply network (2) as a function of the determined line voltage and/or line frequency and/or the determined harmonics of the power supply network (2).

2. Method according to claim 1,
**characterised in that** the power drain characteristic and/or the infeed power characteristic is set as a function of a historical and/or a forecast future infeed power into the power supply network (2) and/or power drain from the power supply network (2).

3. Method according to claim 1 or 2,
**characterised in that** the power drain characteristic is set such that in respect of a change in the line voltage and/or line frequency and/or harmonics the power drain of the consumer (V1) is reduced or increased with a time delay, without a delay or with a continuous transition, and/or that the infeed power characteristic is set such that in respect of a change in the line voltage and/or line frequency and/or harmonics the infeed power of the power supply unit (VE2) is reduced or increased with a time delay, without a delay or with a continuous transition.

4. Method according to one of claims 1 to 3,
**characterised in that** the power drain characteristic is set such that the power drain of the consumer (V1) is reduced or increased if set limit values of the line voltage and/or line frequency and/or harmonics are exceeded or undershot, and/or in that the infeed power characteristic is set such that the infeed power of the supply unit (VE2) is reduced or increased if set limit values of the line voltage and/or line frequency and/or harmonics are exceeded or undershot.

5. Method according to one of the preceding claims,
**characterised in that** the power drain characteristic is set such that the power drain of the consumer (V1) is reduced or increased until set limit values of the line voltage and/or line frequency and/or harmonics are no longer exceeded or undershot, the current power drain is zero and/or the current power drain corresponds to a maximum power of the consumer (V1), and/or **in that** the infeed power characteristic is set such that the infeed power of the supply unit (VE2) is reduced or increased until set limit values of the line voltage and/or line frequency and/or harmonics are no longer exceeded or undershot, the current infeed power is zero and/or the current infeed power corresponds to a maximum infeed power of the consumer unit (VE2).

6. Device (1) for performing a method according to one of claims 1 to 5, wherein at least one supply unit (VE1, VE2) and at least one consumer (V1, V2, V3) are connected via an electrical power supply network (2), and wherein the consumer (V1, V2) and/or the supply unit (VE2) is/are connected (4) to a network controller (3) of the power supply network (2) via a communications link,
**characterised in that** the consumer (V1) has a consumer controller unit (RV), which comprises means for determining a line voltage and/or a line frequency and/or harmonics of the power supply network (2) and for which a power drain characteristic can be set by the network controller (3) via the communications link (4), wherein an electrical power drain of the consumer (V1) from the power supply network (2) can be controlled by the consumer controller unit (RV) by means of the set power drain characteristic as a function of the determined line voltage and/or line frequency and/or the determined harmonics of the power supply network (2) and/or that the supply unit (VE2) has a supply controller unit (RVE), which comprises means for determining a line voltage and/or a line frequency and/or harmonics of the power supply network (2) and for which an infeed power characteristic can be set by the network controller (3) via the communications link (4), wherein an electrical infeed power of the supply unit (VE2) into the power supply network (2) can be controlled by the supply controller unit (RVE) by means of the set infeed power characteristic as a function of the determined line voltage and/or line frequency and/or the determined harmonics of the power supply network (2).

7. Device (1) according to claim 6,
**characterised in that** the consumer controller unit (RV) and/or the supply controller unit (RVE) comprises a switch unit, in which at least one switch is arranged.

8. Device (1) according to claim 6 or 7,
**characterised in that** the consumer controller unit (RV) and/or the supply controller unit (RVE) comprises one or more transformers, step-up converters and/or buck converters.

9. Device (1) according to one of claims 6 to 8,
**characterised in that** the consumer controller unit (RV) and/or the supply controller unit (RVE) comprises one or more rectifiers and/or filters for power factor correction.

10. Device (1) according to one of claims 6 to 9,
**characterised in that** the consumer controller unit (RV) and/or the supply controller unit (RVE) comprises means which are provided for phase-angle control and/or generalised phase control.

## Revendications

1. Procédé d'alimentation en énergie électrique d'au moins un utilisateur (V1, V2, V3), dans lequel un réseau ( 2 ) d'alimentation en énergie électrique relie au moins une unité ( VE1, VE2 ) d'alimentation au au moins un utilisateur ( V1, V2, V3 ) et dans lequel l'utilisateur ( V1, V2 ) et/ou l'unité ( VE2 ) d'alimentation est/sont reliés par une liaison ( 4 ) de communication à un régleur ( 3 ) du réseau ( 2 ) d'alimentation en énergie,
**caractérisé en ce que**, à une unité ( RV ) de régleur de l'utilisateur ( V1 ) est donnée à l'avance, par le régleur ( 3 ) de réseau par l'intermédiaire de la liaison ( 4 ) de communication, une courbe caractéristique de prélèvement de puissance, l'unité ( RV ) de régleur de l'utilisateur déterminant une tension du réseau et/ou une fréquence du réseau et/ou des harmoniques du réseau ( 2 ) d'alimentation en énergie et, à l'aide de la courbe caractéristique de prélèvement de puissance donnée à l'avance, réglant un prélèvement de puissance électrique de l'utilisateur ( V1 ) du réseau ( 2 ) d'alimentation en énergie électrique en fonction de la tension du réseau déterminée et/ou de la fréquence du réseau et/ou des harmoniques déterminées du réseau ( 2 ) d'alimentation en énergie et/ou **en ce que**, à une unité ( RVE ) de régleur d'alimentation de l'unité ( VE2 ) d'alimentation, est donnée à l'avance par le régleur ( 3 ) de réseau par l'intermédiaire de la liaison ( 4 ) de communication, une courbe caractéristique de puissance d'injection, l'unité ( RVE ) de régleur d'alimentation déterminant une tension du réseau et/ou une fréquence du réseau et/ou des harmoniques du réseau ( 2 ) d'alimentation en énergie et, au moyen de la courbe caractéristique de puissance d'injection donnée à l'avance, réglant une puissance électrique d'injection de l'unité ( VE2 ) d'alimentation dans le réseau ( 2 ) d'alimentation en énergie en fonction de la tension du réseau déterminée et/ou de la fréquence du réseau et/ou des harmoniques déterminées du réseau ( 2 ) d'alimentation en énergie.

2. Procédé suivant la revendication 1,
**caractérisé en ce que** la courbe caractéristique de prélèvement de puissance et/ou la courbe caractéristique de puissance d'injection est donnée à l'avance en fonction d'une puissance d'injection historique et/ou à venir pronostiquée dans le réseau ( 2 ) d'alimentation en énergie et/ou d'un prélèvement de puissance du réseau ( 2 ) d'alimentation en énergie.

3. Procédé suivant la revendication 1 ou 2,
**caractérisé en ce que** la courbe caractéristique de prélèvement de puissance est donnée à l'avance, de manière à ce que le prélèvement de puissance de l'utilisateur ( V1 ) soit, par rapport à une variation de la tension du réseau et/ou de la fréquence du réseau et/ou des harmoniques, retardé dans le temps, non-retardé ou diminué ou augmenté avec une transition continue et/ou **en ce que** la courbe caractéristique de la puissance injectée est donnée à l'avance, de manière à ce que la puissance injectée de l'unité ( VE2 ) d'alimentation soit, par rapport à une variation de la tension du réseau et/ou de la fréquence du réseau et/ou des harmoniques, retardée dans le temps, non-retardée ou diminuée ou augmentée suivant une transition continue.

4. Procédé suivant l'une des revendications 1 à 3, **caractérisé en ce que** la courbe caractéristique de prélèvement de puissance est donnée à l'avance, de manière à ce que le prélèvement de puissance de l'utilisateur ( V1 ) soit, pour un dépassement par le haut ou par le bas de valeurs limites données à l'avance de la tension du réseau et/ou de la fréquence du réseau et/ou des harmoniques, diminué ou augmenté et/ou **en ce que** la courbe caractéristique de puissance injectée est donnée à l'avance, de manière à ce que la puissance injectée de l'unité ( VE2 ) d'alimentation soit augmentée ou diminuée, lors d'un déplacement par le haut ou par le bas, de valeurs limites données à l'avance de la tension du réseau et/ou de la fréquence du réseau et/ou des harmoniques.

5. Procédé suivant l'une des revendications précédentes,
**caractérisé en ce que** la courbe caractéristique de prélèvement de puissance est donnée à l'avance, de manière à diminuer ou à augmenter le prélèvement de puissance de l'utilisateur ( V1 ) jusqu'à ce qu'il n'y ait plus de dépassement par le haut ou par le bas de valeurs limites données à l'avance de la tension du réseau et/ou de la fréquence du réseau et/ou des harmoniques, que le prélèvement de puissance présent soit nul et/ou que le prélèvement de puissance présent corresponde à une puissance maximum de l'utilisateur ( V1 ) et/ou **en ce que** la courbe caractéristique de puissance injectée est donnée de l'avance, de manière à diminuer ou à augmenter la puissance injectée de l'unité ( VE2 ) d'alimentation jusqu'à ce qu'il n'y ait plus de dépassement par le haut ou par le bas de valeurs limites données à l'avance de la tension du réseau et/ou de la fréquence du réseau et/ou des harmoniques, que la puissance d'injection soit nulle et/ou que la puissance d'injection présente corresponde à une puissance d'injection maximum de l'unité ( VE2 ) d'alimentation.

6. Dispositif ( 1 ) pour effectuer un procédé suivant l'une des revendications 1 à 5, dans lequel au moins une unité ( VE1, VE2 ) d'alimentation et au moins un utilisateur ( V1, V2, V3 ) sont reliés par un réseau ( 2 ) d'alimentation en énergie électrique et dans lequel l'utilisateur ( V1, V2 ) et/ou l'unité ( VE2 ) d'alimentation est/sont reliés par l'intermédiaire d'une liaison ( 4 ) de communication par un régleur ( 3 ) du réseau ( 2 ) d'alimentation en énergie,
**caractérisé en ce que** l'utilisateur ( V1 ) a une unité ( RV ) de régleur d'utilisateur, qui comprend des moyens de détermination d'une tension du réseau et/ou d'une fréquence du réseau et/ou d'harmoniques du réseau ( 2 ) d'alimentation en énergie et à laquelle il peut être donné à l'avance par le régleur ( 3 ) de réseau par l'intermédiaire de la liaison ( 4 ) de communication une courbe caractéristique de prélèvement de puissance, dans lequel il peut être réglé par l'unité ( RV ) de régleur de l'utilisateur au moyen de la courbe caractéristique de prélèvement de puissance donnée à l'avance, un prélèvement de puissance électrique de l'utilisateur ( V1 ) du réseau ( 2 ) d'alimentation en énergie en fonction de la tension du réseau déterminée et/ou de la fréquence du réseau et/ou des harmoniques déterminées du réseau ( 2 ) d'alimentation en énergie et/ou **en ce que** l'unité ( V2 ) d'alimentation a une unité ( RVE ) de régleur d'alimentation, qui comprend des moyens de détermination d'une tension du réseau et/ou d'une fréquence du réseau et/ou d'harmoniques du réseau ( 2 ) d'alimentation en énergie et à laquelle il peut être donnée à l'avance par le régleur ( 3 ) du réseau par l'intermédiaire de la liaison ( 4 ) de communication une courbe caractéristique de puissance injectée, dans lequel il peut être réglé par l'unité ( RVE ) de régleur d'alimentation au moyen de la courbe caractéristique de puissance injectée donnée à l'avance une puissance électrique injectée de l'unité ( VE2 ) d'alimentation dans le réseau ( 2 ) d'alimentation en énergie en fonction de la tension du réseau déterminé et/ou de la fréquence du réseau et/ou des harmoniques déterminées du réseau ( 2 ) d'alimentation en énergie.

7. Dispositif ( 1 ) suivant la revendication 6,
**caractérisé en ce que** l'unité ( RV ) de régleur de l'utilisateur et/ou l'unité ( RVE ) de régleur d'alimentation comprennent une unité de commutateur, dans laquelle est monté au moins un commutateur.

8. Dispositif ( 1 ) suivant la revendication 6 ou 7,
**caractérisé en ce que** l'unité ( RV ) de régleur de l'utilisateur et/ou l'unité ( RVE ) de régleur de l'alimentation comprennent un ou plusieurs transformateurs, convertisseurs-élévateurs et/ou convertisseurs-abaisseurs.

9. Dispositif ( 1 ) suivant l'une des revendications 6 à 8,
**caractérisé en ce que** l'unité ( RV ) de régleur de l'utilisateur et/ou l'unité ( RBE ) de régleur d'alimentation comprennent un ou plusieurs redresseurs et/ou filtres pour la correction d'un facteur de puissance.

10. Dispositif ( 1 ) suivant l'une des revendications 6 à 9,
**caractérisé en ce que** l'unité ( RV ) de régleur de l'utilisateur et/ou l'unité ( RVE ) de régleur d'alimentation comprennent des moyens, qui sont prévus pour une commande à avance de phase et/ou pour une commande à retard de phase.
